# EUROPEAN PATENT SPECIFICATION

(11) **EP 4 559 765 B1**
(45) Date of publication and mention of the grant of the patent: **02.12.2026**
(21) Application number: 23212391.9
(22) Date of filing: 27.11.2023
(51) Int. Cl.: B60T 8/172, B60T 8/1755

(54) **A METHOD FOR DETERMINING A LATERAL OVERSLIP CONDITION OF A VEHICLE**
VERFAHREN ZUR BESTIMMUNG EINES SEITLICHEN ÜBERRUTSCHZUSTANDS EINES FAHRZEUGS
PROCÉDÉ DE DÉTERMINATION D'UNE CONDITION DE SURGLISSEMENT LATÉRAL D'UN VÉHICULE

(43) Date of publication of application: 28.05.2025
(73) Proprietor: Polestar Performance AB, 405 31 Göteborg (SE)
(72) Inventor: ALBINSSON, Anton, 443 50 Lerum (SE); SALIF, Ramadan, 418 77 Göteborg (SE)
(74) Representative: Zacco Sweden AB

(56) References cited:
- EP-A2- 1 878 596
- WO-A1-01/68388
- US-A1- 2006 069 523

## Description

### TECHNICAL FIELD

The disclosed technology relates to the field of slip detection of tires in vehicles. More specifically, it is related to a method and device for determining a vehicle being in a lateral overslip condition.

### BACKGROUND

Safe operation of a vehicle relies on the traction and grip provided by its tires. Road or tire conditions, abrupt maneuvers, or environmental factors can significantly impact the tire grip, leading to instances of slip in varying extent. Slip is the relative motion between the tire and the road surface it is moving on. It can either be longitudinal slip (commonly referred to as slip ratio), generated by the tire's rotational speed being greater or less than the free-rolling speed, or lateral slip, distinguished by the tire's plane of rotation being at an angle to its direction of motion (referred to as slip angle). Detecting and mitigating tire slip is a central aspect in ensuring the safety of the vehicle and its occupants.

Overslip conditions, i.e. a state in which the tire loses its grip, can be particularly important to detect as it may lead to the vehicle losing control for instance. Moreover, detecting these overslip conditions at an early state, preferably before they occur, can greatly improve the safety of the vehicle as this can be used as a trigger for deploying mitigating actions to try to counteract or prevent the overslip condition.

Current systems for detecting overslip conditions, in particular lateral overslip conditions, rely on monitoring of a vehicle response. However, these systems does not detect the overslip condition until sometime after it has happened. Moreover, current systems has limited resolution in that it cannot detect overslip condition on a more detailed level than on wheel axle level. In addition, lateral slip can be especially hard to determine, since lateral velocity of the vehicle is difficult to estimate. Furthermore, it does not provide any good way of estimating lateral slip of individual tires.

There is therefore a need in the field for improved ways of determining overslip conditions of a vehicle to effectively address the limitation of current tire slip detection systems and that offers the enhanced precision and responsiveness necessary to promptly and accurately identify and address incipient slip, especially in situations where quick intervention is beneficial to prevent or reduce the impact of incidents.

EP 1 878 596 A2 discloses an apparatus that acquires acceleration data in time series at a fixed position of a tire while a vehicle having the tire is traveling on a road surface, obtains a spectrum of the acceleration by subjecting the acquired time series acceleration data to frequency analysis, and detects a peak value of the spectrum of the acceleration in a frequency range of 500Hz - 1500Hz. The apparatus evaluates a degree of a safety in traveling of the vehicle according to the detected peak value. The acceleration data is acquired by an acceleration sensor mounted on the fixed position of the tire.

### SUMMARY

The herein disclosed technology seeks to mitigate, alleviate or eliminate one or more of the above-identified deficiencies and disadvantages in the prior art to address various problems relating to determining a lateral overslip condition of a vehicle, or of a tire thereof.

The inventors have realized a new and improved way of detecting a lateral overslip condition that is based on detecting a lateral and/or vertical vibration within a defined frequency range. The proposed technology enables detection of the lateral overslip condition at an early stage, when the tire force is saturated, instead of waiting for the vehicle response (e.g. when loss of grip has already had an effect on the vehicle motion) to indicate the overslip condition. This provides for initiating stability control interventions for handling the potential loss of grip at an early stage which can improve the outcome. The proposed technology may be used as a stand-alone slip detection system, or be combined with other metrics to supplement an already existing slip detection system. In particular, it may aid the existing slip detection system in tricky conditions, e.g. at large side slip (i.e. lateral slip) angles which cannot otherwise easily be detected. Moreover, the presently disclosed technology can be used as an indication of friction estimation to determine the force limits, e.g. in critical maneuvers.

Various aspects and embodiments of the disclosed invention are defined below and in the accompanying independent and dependent claims.

According to a first aspect, there is provided a method for determining a lateral overslip condition of a vehicle. The method comprises obtaining sensor data pertaining to a lateral and/or vertical vibration of the vehicle. The method further comprises, in response to detecting a frequency of the lateral and/or vertical vibration of the vehicle being within a defined frequency range, determining the vehicle as being in the lateral overslip condition.

As stated above, determining the lateral overslip condition of the vehicle based on lateral and/or vertical vibrations provides for an early detection. This can be utilized in enabling a more efficient stability or traction control of the vehicle and give an earlier warning to a driver of the vehicle, compared to current ways of slip detection.

Moreover, some embodiments of the presently disclosed technology may allow for slip detection of individual tires. In other words, it can be used to determine a particular tire as being in the lateral overslip condition. This may further enhance the performance of the stability control system.

Even further, the presently disclosed technology may provide for a cost efficient way of determining the presence of overslip condition in that it can be achieved on relatively simple sensor measurements and from relatively inexpensive sensors.

The sensor data may comprise sensor data pertaining to a lateral vibration of a body of the vehicle. Determining the vehicle as being in the lateral overslip condition may then be performed in response to detecting the frequency of the lateral vibration of the body of the vehicle being within the defined frequency range. Determining the vehicle as being in the lateral overslip condition may then comprise determining at least one tire of the vehicle as being in the lateral overslip condition. By determining the vehicle as being in the lateral overslip condition based on a lateral vibration of the body may provide for a general overall view of the slip condition of the vehicle. Thus, in cases where it is not necessary to know which specific tire (or tires) that is in the overslip condition, this provides the required information in an efficient way. It may for instance be efficient in the sense that overslip conditions can be detected in any tire of the vehicle, by only having to monitor vibrations centrally in the body of the vehicle. Moreover, it enables the utilization of already existing sensors in the vehicle which are adapted to measure vibrations. Furthermore, an improved detection rate for overslip conditions can be achieved. Additionally, this process of determining overslip condition can be combined with conventional slip detection that cannot detect overslip in all conditions.

The sensor data pertaining to a lateral vibration of a body of the vehicle may be obtained from an inertial measurement unit of the vehicle. Inertial measurement units are commonly fitted to vehicles for several purposes. So, utilizing this in determining the vehicle as being in a lateral overslip condition, provides for a cost efficient solution.

The sensor data may comprise sensor data pertaining to a lateral vibration of a tire of the vehicle. Determining the vehicle as being in the lateral overslip condition may be performed in response to detecting the frequency of the lateral vibration of the tire being within the defined frequency range. Determining the vehicle as being in the lateral overslip condition may then comprise determining said tire as being in the lateral overslip condition.

A possible associated advantage of determining the vehicle as being in the lateral overslip condition based on lateral vibrations of a tire is that it can be determined which specific tire (or tires) of the vehicle is in the overslip condition. As a consequence, a targeted stability control intervention may be enabled for the specific tire (or tires), thereby improving its results.

The sensor data pertaining to the lateral vibration of the tire may be obtained from an accelerometer arranged at said tire.

The sensor data may comprise sensor data pertaining to a vertical vibration of a tire of the vehicle. Determining the vehicle as being in the lateral overslip condition may be performed in response to detecting the frequency of the vertical vibration of the tire being within the defined frequency range. Determining the vehicle as being in the lateral overslip condition may then comprise determining said tire as being in the lateral overslip condition. The advantages of determining lateral overslip condition based on lateral vibrations of a tire, are applicable also for determining the lateral overslip condition based on vertical vibrations. Moreover, obtaining sensor data pertaining to vertical vibrations of the tire(s) can be readily achieved using a standard sensor setup of a vehicle, thus enabling a cost-effective solution.

The sensor data pertaining to the vertical vibration of the tire may be obtained from a vertical motion sensor or an accelerometer arranged at said tire.

The method may further comprising, in response to determining the tire being in the lateral overslip condition, compensating, by a damper of said tire, said vibrations. By compensating the damper, said vibrations can be reduced. This may in turn improve the grip or traction of the tire, as well as comfort of the ride.

The method may further comprise, in response to determining the vehicle being in the lateral overslip condition, activating a stability control system of the vehicle.

The sensor data may be obtained in real-time.

The defined frequency range according to the invention is 40-70Hz. More specifically, the defined frequency range may be 50-60Hz.

According to a second aspect, there is provided a computer program product comprising instructions which, when the program is executed by a computing device, causes the computing device to carry out the method according to the first aspect. Any of the above-mentioned features and advantages of the first aspect, when applicable, apply to this second aspect as well. In order to avoid undue repetition, reference is made to the above.

According to a third aspect, there is provided a (non-transitory) computer-readable storage medium. The non-transitory computer-readable storage medium stores one or more programs configured to be executed by one or more processors of a processing system, the one or more programs comprising instructions for performing the method according to the first aspect. Any of the above-mentioned features and advantages of the first and second aspect, when applicable, apply to this third aspect as well. In order to avoid undue repetition, reference is made to the above.

According to a fourth aspect, there is provided a device for determining a lateral overslip condition of a vehicle. The device comprises control circuitry. The control circuitry is configured to obtain sensor data pertaining to a lateral and/or vertical vibration of the vehicle. The control circuitry is further configured to, in response to detecting a frequency of the lateral and/or vertical vibration of the vehicle being within a defined frequency range, determine the vehicle as being in the lateral overslip condition, wherein the defined frequency range is 40-70 Hz.

Any of the above-mentioned features and advantages of the first, second and third aspect, when applicable, apply to this fourth aspect as well. In order to avoid undue repetition, reference is made to the above.

According to a fifth aspect, there is provided a vehicle. The vehicle comprises a body and a set of tires. The vehicle further comprises one or more sensors configured to obtain sensor data pertaining to a lateral and/or vertical vibration of the vehicle. The vehicle further comprises the device according to the fourth aspect.

The one or more sensors may comprise one or more of an inertial measurement unit configured to measure a lateral vibration of the body of the vehicle, an accelerometer arranged at a tire of the set of tires and configured to measure a lateral and/or vertical vibration of said tire, or a vertical motion sensor arranged at the tire and configured to measure a vertical vibration of said tire.

Any of the above-mentioned features and advantages of the first, second, third and fourth aspect, when applicable, apply to this fifth aspect as well. In order to avoid undue repetition, reference is made to the above.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments and variants described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method for determining a lateral overslip condition of a vehicle, in accordance with some embodiments.
Figure 2 is a schematic illustration of a device for determining a lateral overslip condition of a vehicle, in accordance with some embodiments.
Figure 3 is a schematic illustration of a vehicle, in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus or device comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

Throughout the present disclosure, the wording "wheel" should be understood as the combination of a rim and a tire. In turn, the wording "tire" refers to the ringshaped component surrounding the wheel's rim that transfer the vehicle's load from the axle, through the wheel, to the ground, and provides traction and cornering forces on the surface over which the wheel travels.

The presently disclosed technology is at least partly based on the realization that monitoring lateral and/or vertical vibrations generated in tires of a vehicle can give an indication of the slip condition of the tires. From previous tire research, it is known that the tire carcass moves in different modes having distinct Eigen frequencies. The inventors has found that certain modes become less damped at high tire slip levels due to the reduced damping in the contact patch between the tire and the road surface. These vibrations, which can show in both a vertical and a lateral direction of the tire, can be picked up e.g. by level sensors arranged at the tires, or even by an inertial measurement unit provided in the vehicle. As will be further explained in the following, the disclosed technology utilizes these measurements to determine whether the vehicle, or more specifically a particular tire of the vehicle, is in an lateral overslip condition. In other words, the principles disclosed herein can be used to determine the vehicle as a whole as being in a lateral overslip condition, or specific tires thereof.

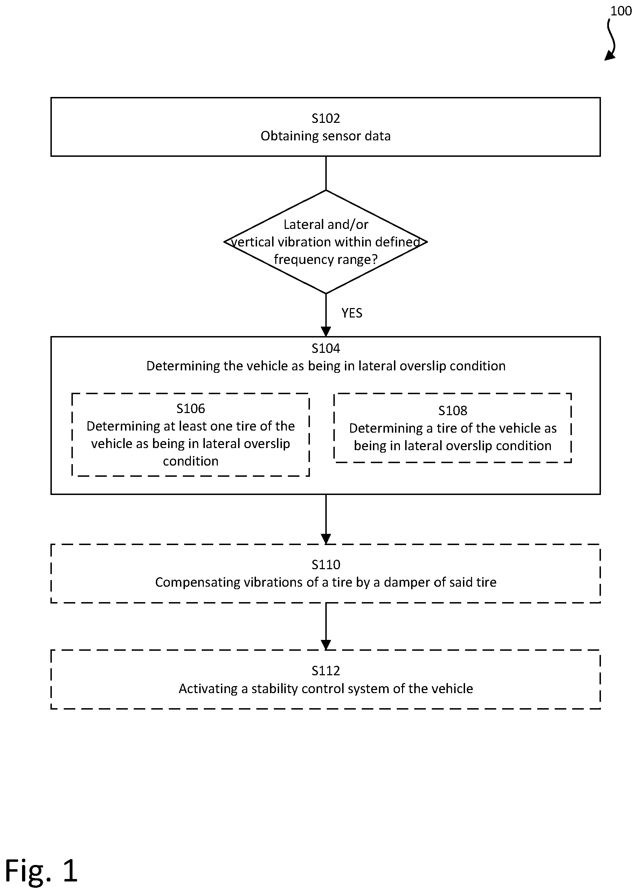

Figure 1 is a schematic flowchart representation of a method 100 for determining a lateral overslip condition of a vehicle. Put differently, the method 100 may be a method for determining (also referred to as detecting) the vehicle, or a tire of the vehicle, as being in an overslip condition. Determining that the vehicle is in the lateral overslip condition may encompass determining that at least one tire of the vehicle is in the lateral overslip condition, without knowing which one. Thus, when stating that the vehicle is in an overslip condition, it is herein meant that any one of the tires of the vehicle is in the overslip condition. It may also encompass determining a specific tire (or tires) of the vehicle as being in the lateral overslip detection. Thus, when stating that a tire is in an overslip condition, it is meant that that specific tire (or tires) is in an overslip condition. The method 100 may thus be described as a method for determining a lateral overslip condition of a tire of a vehicle.

Lateral slip of a vehicle is commonly known as an angle between a plane of rotation of a tire, and its direction or movement. Put differently, the lateral slip of a tire may be seen as the angle between the direction it is moving and the direction it is pointing. Lateral slip can occur, for instance, in cornering, and can lead to a deformation in the tire carcass and thread, which in turn leads to a generated force. Despite the name, no actual sliding is necessary for small slip angles. Sliding (or loss of grip) may occur, starting at the rear of the contact patch, as slip angle increases. More specifically, sliding may occur once the slip (or slip angle) reaches or exceeds a slip peak. The wording "overslip" as used herein, refers to the point at which sliding occurs. In other words, lateral overslip may be understood as the case when the slip exceeds the slip peak. The slip peak may be the peak of the lateral force on the tire, as a function of slip. Moreover, the wording "lateral overslip condition" may be understood as the vehicle (or a tire thereof) is in a state where it may end up losing, or already has lost, its grip with the surface it is moving on. If determining the vehicle, or tire, as being in the lateral overslip condition, it may thus be possible to prevent the vehicle (or tire) to reach the point of losing grip, or to reduce the effect of having lost the grip.

The wording "vertical" as in "vertical vibrations" or "vertical direction" herein refers to a direction within the tire perpendicular to the ground. In other words, it can be used to describe an upwards and downwards motion of the tire. Similarly, the wording "lateral" as in "lateral vibration" or "lateral direction" refers to a direction parallel to the ground, or more specifically, coincident with a central axis of the tire. Thus, the lateral direction is also perpendicular to the vertical direction. Movements in the lateral direction may be described as a side-to-side motion of the tire.

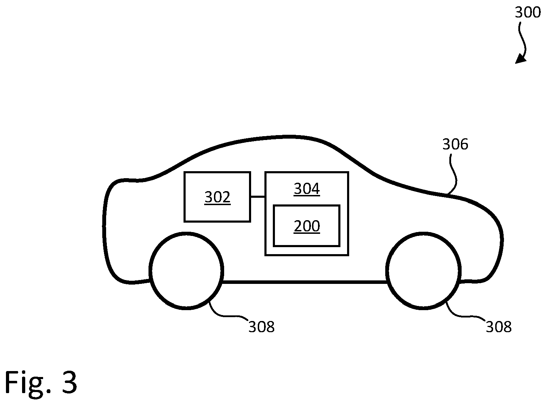

The method 100 may be a computer-implemented method. The method 100 may for instance be performed by a processing system of the vehicle. An example of such vehicle 300 is described below in connection with Fig. 3. The processing system may for example comprise one or more processors and one or more memories coupled to the one or more processors, wherein the one or more memories store one or more programs that perform the steps, services and functions of the method 100 disclosed herein when executed by the one or more processors.

Below, the different steps of the method 100 are described in more detail. Even though illustrated in a specific order, the steps denoted S110 and S112 in Fig. 1 can be performed independently of each other, and in any order, based on a specific realization. Such variation will depend on the software and hardware systems chosen and on designer choice. All such variations are within the scope of the invention. Likewise, software implementations could be accomplished with standard programming techniques with rule-based logic and other logic to accomplish the various steps.

The above mentioned and described embodiments are only given as examples and should not be limiting to the present invention. Other solutions, uses, objectives, and functions within the scope of the invention as claimed in the below described patent claims should be apparent for the person skilled in the art.

The method 100 comprises obtaining S102 sensor data pertaining to a lateral and/or vertical vibration of the vehicle 300. The sensor data may in other words comprise information indicative of the lateral and/or vertical vibration of the vehicle 300. As will be further explained in the following, the lateral and/or vertical vibration of the vehicle may be vibrations of a body of the vehicle, or of a tire of the vehicle. Thus, the principles of the presently disclosed technology can be realized using lateral or vertical vibrations. However, a combination of the two may also be used. Moreover, the vibrations can be monitored either of individual tires, or of the body of the vehicle. However, a combination of the two may also be used. How the different alternatives can be implemented will be further explained in the following.

The term "obtaining" is throughout the present disclosure to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In the present case, obtaining sensor data pertaining to the lateral and/or vertical vibration of the vehicle may e.g. encompass collecting the sensor data by or receiving the sensor data from one or more sensors of the vehicle. Alternatively, it may encompass receiving the sensor data from a memory to which the sensor data was stored.

The method 100 further comprises, in response to detecting a frequency of the lateral and/or vertical vibration of the vehicle 300 being within a defined frequency range, determining S104 the vehicle 300 as being in the lateral overslip condition. Put differently, the vehicle 300 may be determined as being in the lateral overslip condition if the lateral and/or vertical vibration is within the defined frequency range. In case both the lateral and vertical vibration obtained, the vehicle may be determined as being in the lateral overslip condition is either one, or both of the lateral and vertical vibration is within the defined frequency range. As will be further explained below, determining S104 the vehicle 300 as being in the lateral overslip condition may involve determining that at least one tire of the vehicle is in the lateral overslip condition, without knowing which one(s), or determining that a specific tire of the vehicle is in the lateral overslip condition.

The defined frequency range may be the same for the lateral and vertical vibration. The defined frequency range is 40-70Hz. More specifically, the frequency range may be 50-60Hz.

The lateral and vertical vibrations generated in a tire around the point of losing grip is typically generated in the carcass of the tire. The frequency range may thus be dependent on a construction of the tire carcass. The method may further comprise setting the defined frequency range based on the tire carcass the tire. Setting the frequency range based on the tire carcass may allow the method to adapt to a construction of a specific tire, a tire type (such as winter or summer tires), or wear of the tire. The defined frequency range may be further dependent on additional properties of the tire, as well as the road surface. Thereby, the defined frequency range can be individualized for a specific vehicle, by an online approach, to obtain a more accurate frequency range.

In some embodiments, the obtained sensor data comprises sensor data pertaining to a lateral vibration of a body 306 of the vehicle 300. In such case, the step of determining S104 the vehicle as being in the lateral overslip condition may be performed in response to detecting the frequency of the lateral vibration of the body 306 of the vehicle 300 being within the defined frequency range. In other words, in a case where the obtained sensor data pertains to a lateral vibration of the body of the vehicle, the vehicle may be determined as being in the overslip condition if the frequency of the lateral vibration is within the defined frequency range. Moreover, the step of determining S104 the vehicle being in the lateral overslip condition may comprise determining S106 at least one tire of the vehicle 300 as being in the lateral overslip condition. Put differently, the method 100 may comprise determining S106 at least one tire of the vehicle 300 as being in the lateral overslip condition, in response to detecting the frequency of the lateral vibration of the body of the vehicle being within the defined frequency range. Put differently, this may be seen as determining the vehicle as having at least one tire being in a lateral overslip condition. This may be seen as a specification of the step denoted S104 described above.

Detecting a lateral vibration of the body of the vehicle being in the defined frequency range may be indicative of one or more tires of the vehicle being in a lateral overslip condition. In other words, by looking a lateral vibration of the vehicle body, it can be determined that the at least one tire of the vehicle is in a lateral overslip condition, although not which one. However, this may still give an early indication that the vehicle as a whole is in the lateral overslip condition, and may serve as a trigger for notifying the driver, or taking action in any other way. Further sensor data associated with individual tires can then be used to determine which tire, or tires, are in the lateral overslip condition, as will be further described below.

The lateral vibration of the body may be sensed around a center of gravity of the vehicle body. The sensor data pertaining to a lateral vibration of a body 306 of the vehicle 300 may be obtained from an inertial measurement unit of the vehicle 300. The inertial measurement unit may be arranged at, or around, the center of gravity of the vehicle.

In some embodiments, the obtained sensor data comprises sensor data pertaining to a lateral vibration of a tire of the vehicle 300. In such case, the step of determining S104 the vehicle as being in the lateral overslip condition may be performed in response to detecting the frequency of the lateral vibration of the tire being within the defined frequency range. In other words, in a case where the obtained sensor data pertains to a lateral vibration of a specific tire of the vehicle, the vehicle may be determined as being in the overslip condition if the frequency of the lateral vibration of the tire is within the defined frequency range. Moreover, the step of determining S104 the vehicle as being in the lateral overslip condition may comprise determining S016 said tire as being in the lateral overslip condition. Put differently, the method 100 may comprise determining S108 a tire of the vehicle 300 as being in the lateral overslip condition, in response to detecting the frequency of the lateral vibration of said tire of the vehicle being within the defined frequency range. This may be seen as a specification of the step denoted S104 described above.

By looking at lateral vibrations of a specific tire, information about which tire of the vehicle is in the lateral overslip condition can be obtained. This information may be used in combination with looking at the lateral vibration of the vehicle body, as described in the foregoing. In such case, the tire may be determined as being in the lateral overslip condition if one, or both of the lateral vibration of the body and the lateral vibration of the tire is within the defined frequency range. It is to be noted that the same, or different, frequency ranges may be used for vibrations detected of the body and of a tire of the vehicle.

The sensor data pertaining to the lateral vibration of the tire may be obtained by any suitable sensors, such as an accelerometer arranged at said tire. The accelerometer may thus be configured to measure lateral vibrations of the tire.

As used herein, the wording "arranged at a tire" in the context of a sensor being arranged at said tire, it is meant that it is arranged such that it can measure the vibration of the tire. The sensor (e.g. accelerometer, vertical motion sensor, level sensor, suspension displacement sensor etc.) may be placed at any suitable position of, or in the vicinity of, the wheel of which said tire is part of. As an example, a sensor displacement sensor may be placed in connection with a suspension connected to the wheel. As another example, an accelerometer may be placed on the rim of the wheel. Moreover, when it is stated that the sensor data pertains to a lateral or vertical vibration of a tire, it is to be understood that the sensor data may as well pertain to a lateral or vertical vibration of the wheel as a whole. The vibrations referred to herein is generated by an interaction between the tire and the surface it is travelling on. More specifically, it may be seen as a relative motion between the tire and the rim. In other words, the lateral or vertical vibrations may be a vibration of the tire on the rim. The wheel may in turn transfer the vibrations to the vehicle structure (i.e. the body of the vehicle). Thus, even though a vibration of the wheel (or its rim) is measured to obtain the sensor data, said sensor data still pertains to a vibration of the tire.

In some embodiments, the obtained sensor data comprises sensor data pertaining to a vertical vibration of a tire of the vehicle 300. In such case, the step of determining S104 the vehicle as being in the lateral overslip condition may be performed in response to detecting the frequency of the vertical vibration of the tire being within the defined frequency range. In other words, in a case where the obtained sensor data pertains to a vertical vibration of a specific tire of the vehicle, the vehicle may be determined as being in the overslip condition if the frequency of the vertical vibration of the tire is within the defined frequency range. Moreover, the step of determining S104 the vehicle as being in the lateral overslip condition may comprise determining S016 said tire as being in the lateral overslip condition. Put differently, the method 100 may comprise determining S108 a tire of the vehicle 300 as being in the lateral overslip condition, in response to detecting the frequency of the vertical vibration of said tire of the vehicle being within the defined frequency range. This may be seen as a specification of the step denoted S104 described above. Looking at the vertical vibrations of the tire may be used on its own, or in combination with looking at the lateral vibration of the body and/or tire as described in the foregoing. By looking at vibrations of different types (i.e. lateral and vertical vibrations) and/or at different places (i.e. of the body and of a tire) may result in a higher confidence determination of the lateral overslip condition.

The sensor data pertaining to the vertical vibration of the tire may be obtained from a vertical motion sensor or an accelerometer arranged at said tire. The vertical motion sensor may e.g. be a level sensor or a suspension displacement sensor. The vertical motion sensor may be configured to measure a vertical displacement, a vertical velocity, or a vertical acceleration of the tire, relative the suspension or vehicle body. The accelerometer may be configured to measure vertical vibrations of said tire. It goes without saying that the accelerometer may be configured to measure both a vertical and a lateral vibration of the tire.

Upon determining S104 that the vehicle is in the overslip condition, a stability control intervention may be deployed. As an example, the method 100 may further comprise, in response to determining the vehicle 300 being in the lateral overslip condition, activating S112 a stability control system of the vehicle 300. The stability control system may e.g. be an electronic stability control (ESC) system. Activating S112 the stability control system may comprise transmitting a triggering signal to the stability control system. In a further example, the method 100 may further comprise, in response to determining the tire being in the lateral overslip condition, compensating S110, by a damper of said tire, said vibrations. Thereby, the lateral and/or vertical vibrations of said tire can be reduced, which can improve the grip of the tire. For example, a dampening effect of said damper may be increased upon detecting lateral or vertical vibrations within the defined frequency range. Moreover, dampers of one or more of the remaining tires of the vehicle may also be compensated for, for improved wheel control, comfort and grip.

The above-described principles of the presently disclosed technology can be performed continuously (e.g. constantly in real-time), at spaced-apart instances (e.g. periodically, randomly, upon occurrence of a trigger event), and/or with any other suitable temporal characteristic. For example, the sensor data may be obtained in real-time, e.g. continuously or at spaced-apart instances. In other words, the lateral and/or vertical vibrations may be continuously monitored to detect if the lateral vibrations and/or vertical vibrations reaches values within the defined frequency range. Thus, also determining S104 the vehicle as being in the lateral overslip condition can be performed in real-time as described above. Moreover, compensating S110 for the vibrations (e.g. by dampers of vehicle, or stability control system) may then be performed as needed, as the vehicle is driven.

Executable instructions for performing these functions are, optionally, included in a non-transitory computer-readable storage medium or other computer program product configured for execution by one or more processors.

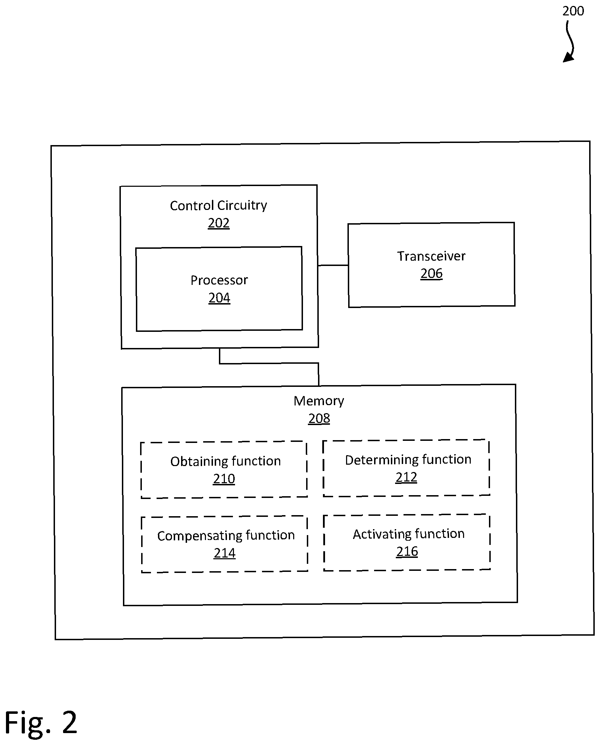

Figure 2 is a schematic illustration of a device 200 for determining a lateral overslip condition of a vehicle. In particular, the device 200 is configured to perform the techniques of the method 100 described in the foregoing with reference to Fig. 1. The device 200 may be provided locally in the vehicle. However, as can be readily understood, the device 200 may be provided as an external device or unit to the vehicle, such as a remote server or cloud implementation. In such case, the device 200 may be communicatively connected to the vehicle. An example of a vehicle is further described below in connection with Fig. 3.

The device 200 comprises control circuitry 202. The control circuitry 202 may physically comprise one single circuitry device. Alternatively, the control circuitry 202 may be distributed over several circuitry devices. As an example, the device 200 may share its control circuitry 202 with other parts of the vehicle, such as a control system of the vehicle.

As shown in the example of Fig. 2, the device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the device 200. The control circuitry 202 may include a processor 204, such as a central processing unit (CPU), microcontroller, or microprocessor. The processor 204 may be configured to execute program code stored in the memory 208, in order to carry out functions and operations of the device 200. The control circuitry 202 is configured to perform the steps of the method 100 as described above in connection with Fig. 1. The steps may be implemented in one or more functions stored in the memory 208. The control circuitry 202 may be configured to execute an obtaining function 210, a determining function 212, a compensating function 214, and/or an activating function 216. It should be noted that the various function and operation of the device 200 may be implemented in additional functions than those described herein. In addition, one or more of the above functions may be implemented together in a common function. For example, the compensating function 214 and the activating function 216 may be implemented by a common stability control intervention function. Such variations depend on a specific realization of the presently disclosed technology.

The transceiver 206 may be configured to enable the device 200 to communicate with other devices. The transceiver 206 may both transmit data from and receive data to the device 200. For example, the device 200 may receive sensor data from one or more sensors of the vehicle. Further, the device 200 may transmit data to other units or systems of the vehicle. As an example, the device 200 may transmit a signal indicative of the vehicle (or a tire thereof) being in an overslip condition to a stability control system of the vehicle, or transmit said signal to a user interface for notifying a driver of the vehicle. Further, the device 200 may transmit data to one or more further vehicles, or to a remote server or the like.

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long term data storage and a volatile memory that functions as system memory for the device 200. The memory 208 may exchange data with the circuitry 202 over the data bus. Accompanying control lines and an address bus between the memory 208 and the circuitry 202 also may be present.

Functions and operations of the device 200 may be implemented in the form of executable logic routines (e.g., lines of code, software programs, etc.) that are stored on a non-transitory computer readable recording medium (e.g., the memory 208) of the device 200 and are executed by the circuitry 202 (e.g. using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. Also, while the described functions and operations may be implemented in software, such functionality may as well be carried out via dedicated hardware or firmware, or some combination of one or more of hardware, firmware, and software. In the following, the function and operations of the device 200 is described.

The control circuitry 202 is configured to obtain sensor data pertaining to a lateral and/or vertical vibration of the vehicle 300. This may e.g. be performed by execution of the obtaining function 210.

The control circuitry 202 is further configured to, in response to detecting a frequency of the lateral and/or vertical vibration of the vehicle 300 being within a defined frequency range, determine the vehicle 300 as being in the lateral overslip condition. This may e.g. be performed by execution of the determining function 212.

The sensor data may comprise sensor data pertaining to a lateral vibration of a body 306 of the vehicle 300. In such case, the control circuitry 202 may be configured to determine at least one tire of the vehicle 300 as being in the lateral overslip condition, in response to detecting the frequency of the lateral vibration of the body 306 of the vehicle 300 being within the defined frequency range.

The sensor data may comprise sensor data pertaining to a lateral vibration of a tire of the vehicle 300. In such case, the control circuitry 202 may be configured to determine said tire as being in the lateral overslip condition, in response to detecting the frequency of the lateral vibration of the tire being within the defined frequency range.

The sensor data may comprise sensor data pertaining to a vertical vibration of a tire of the vehicle 300. In such case, the control circuitry 202 may be configured to determine said tire as being in the lateral overslip condition, in response to detecting the frequency of the vertical vibration of the tire being within the defined frequency range.

The control circuitry 202 may be further configured to, in response to determining a tire being in the lateral overslip condition, compensate, by a damper of said tire, said vibrations. This may e.g. be performed by execution of the compensating function 214.

The control circuitry 202 may be further configured to, in response to determining the vehicle 300 being in the lateral overslip condition, activate a stability control system of the vehicle. This may e.g. be performed by execution of the activating function 216.

It should be noted that principles, features, aspects, and advantages of the method 100 as described above in connection with Fig. 1, are applicable also to the device 200 described herein, and vice versa. In order to avoid undue repetition, reference is made to the above.

Figure 3 is a schematic illustration of a vehicle 300 in accordance with some embodiments. The vehicle 300 is to be understood as an example of the vehicle as described in the foregoing in connection with Fig. 1 and 2. In particular, the vehicle 300 comprises the device 200 as described above in connection with Fig. 2. Thus, the vehicle 300 is enabled for determining it being in a lateral overslip condition, or more specifically, one or more tires of the vehicle 300 being in a lateral overslip condition. As used herein, a "vehicle" is any form of motorized transport. For example, the vehicle 300 may be any road vehicle such as a car (as illustrated herein), a (cargo) truck, a bus, etc. However, for the sake of simplicity, the present inventive concept will be explained in connection with a vehicle having four wheels, although not limited thereto.

The vehicle 300 comprises a body 306, and a set of tires 308. More specifically, the vehicle 300 comprises a set of wheels, each wheel comprising a tire 308. As is readily understood, the vehicle 300 may comprise any systems or components commonly found in ordinary vehicles.

The vehicle 300 may for instance comprise a control system 304. The control system 304 may be configured to carry out overall control of functions and operations of the vehicle 300. The control system 304 may comprise control circuitry and a memory. The control circuitry may physically comprise one single circuitry device. Alternatively, the control circuitry may be distributed over several circuitry devices. As an example, the control system 304 may share its control circuitry with other parts of the vehicle. The control circuitry may comprise one or more processors, such as a central processing unit (CPU), microcontroller, or microprocessor. The one or more processors may be configured to execute program code stored in the memory, in order to carry out functions and operations of the vehicle 300. The processor(s) may be or include any number of hardware components for conducting data or signal processing or for executing computer code stored in the memory. The memory 506 may include database components, object code components, script components, or any other type of information structure for supporting the various activities of the present description. The device 200, as described above in connection with Fig. 2, may be provided in the vehicle 300 and share its control circuitry with the control system 304 of the vehicle 300. Thus, the device 200 may be implemented as part of the control system 304, as illustrated in Fig. 3. Alternatively, the device 200 may be implemented as part of any other system or module of the vehicle 300. Alternatively, the device 200 may be implemented as a separate module of the vehicle 300.

Moreover, the vehicle 300 comprises one or more sensors 302. The one or more sensors 302 may be communicatively connected to the control system 304, or more specifically to the device 200. The one or more sensors 302 are configured to obtain sensor data pertaining to a lateral and/or vertical vibration of the vehicle 300. The lateral and/or vertical vibration may be vibrations of the body 306 of the vehicle 300, or of the respective tires 308 (or wheels) of the vehicle 300.

The one or more sensors 302 may comprise one or more of an inertial measurement unit, an accelerometer, or a vertical motion sensor. The inertial measurement unit may be arranged in the body 306 of the vehicle 300 and be configured to measure a lateral vibration of the body 306. The accelerometer may be arranged at a tire of the set of tires 308 and configured to measure a lateral and/or vertical vibration of said tire. The vertical motion sensor may be arranged at the tire and be configured to measure a vertical vibration of said tire. The vertical motion sensor may e.g. be a level sensor or a suspension displacement sensor. The vertical motion sensor may be configured to measure a vertical displacement, a vertical velocity, or a vertical acceleration of the tire, relative the suspension or vehicle body.

The vehicle 300 may thus be provided with an inertial measurement unit arranged in the body of the vehicle, and/or sensors arranged at the respective tires (or wheels) of the vehicle configured to measure the vertical and/or lateral vibration of the tires.

The present invention has been presented above with reference to specific embodiments. However, performing the methods by hardware or software, or further modifications may be provided within the scope of the invention, as defined by the appended claims. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A method (100) for determining a lateral overslip condition of a vehicle (300), the method (100) comprising:
obtaining (S102) sensor data, from one or more sensors of the vehicle, pertaining to a lateral and/or vertical vibration of the vehicle (300), the one or more sensors comprise one or more of an inertial measurement unit configured to measure a lateral vibration of the body of the vehicle, an accelerometer arranged at a tire of a set of tires of the vehicle and configured to measure a lateral and/or vertical vibration of said tire, or a vertical motion sensor arranged at the tire and configured to measure a vertical vibration of said tire; and
in response to detecting a frequency of the lateral and/or vertical vibration of the vehicle (300) being within a defined frequency range, determining (S104) the vehicle (300) as being in the lateral overslip condition, wherein the defined frequency range is 40-70Hz.

2. The method (100) according to claim 1, wherein the sensor data comprises sensor data pertaining to a lateral vibration of a body (306) of the vehicle (300), and
wherein determining (S104) the vehicle as being in the lateral overslip condition is performed in response to detecting the frequency of the lateral vibration of the body (306) of the vehicle (300) being within the defined frequency range, and comprises determining (S106) at least one tire of the vehicle (300) as being in the lateral overslip condition.

3. The method (100) according to claim 2, wherein the sensor data pertaining to a lateral vibration of a body (306) of the vehicle (300) is obtained from an inertial measurement unit of the vehicle (300).

4. The method (100) according to any one of the claims 1 to 3, wherein the sensor data comprises sensor data pertaining to a lateral vibration of a tire of the vehicle (300), and
wherein determining (S104) the vehicle (300) as being in the lateral overslip condition is performed in response to detecting the frequency of the lateral vibration of the tire being within the defined frequency range, and comprises determining (S108) said tire as being in the lateral overslip condition.

5. The method (100) according to claim 4, wherein the sensor data pertaining to the lateral vibration of the tire is obtained from an accelerometer arranged at said tire.

6. The method (100) according to any one of the claims 1 to 5, wherein the sensor data comprises sensor data pertaining to a vertical vibration of a tire of the vehicle (300), and
wherein determining (S104) the vehicle as being in the lateral overslip condition is performed in response to detecting the frequency of the vertical vibration of the tire being within the defined frequency range, and comprises determining (S108) said tire as being in the lateral overslip condition.

7. The method (100) according to claim 6, wherein the sensor data pertaining to the vertical vibration of the tire is obtained from a vertical motion sensor or an accelerometer arranged at said tire.

8. The method (100) according to any one of the claims 4 to 7, further comprising, in response to determining the tire being in the lateral overslip condition, compensating (S110), by a damper of said tire, said vibrations.

9. The method (100) according to any one of the claims 1 to 8, further comprising, in response to determining the vehicle (300) being in the lateral overslip condition, activating (S112) a stability control system of the vehicle.

10. The method (100) according to any one of the claims 1 to 9, wherein the sensor data is obtained in real-time.

11. A computer program product comprising instructions, which when the program is executed by a computing device, causes the computing device to carry out the method (100) according to any one of the claims 1 to 10.

12. A device (200) for determining a lateral overslip condition of a vehicle (300), the device (200) comprising control circuitry (202) configured to:
obtain sensor data, from one or more sensors of the vehicle, pertaining to a lateral and/or vertical vibration of the vehicle (300), the one or more sensors comprise one or more of an inertial measurement unit configured to measure a lateral vibration of the body of the vehicle, an accelerometer arranged at a tire of a set of tires of the vehicle and configured to measure a lateral and/or vertical vibration of said tire, or a vertical motion sensor arranged at the tire and configured to measure a vertical vibration of said tire; and
in response to detecting a frequency of the lateral and/or vertical vibration of the vehicle (300) being within a defined frequency range, determine the vehicle (300) as being in the lateral overslip condition, wherein the defined frequency range is 40-70Hz.

13. A vehicle (300) comprising:
a body (306),
a set of tires (308),
one or more sensors (302) configured to obtain sensor data pertaining to a lateral and/or vertical vibration of the vehicle (300), wherein the one or more sensors (302) comprises one or more of an inertial measurement unit configured to measure a lateral vibration of the body (306) of the vehicle (300), an accelerometer arranged at a tire of the set of tires (308) and configured to measure a lateral and/or vertical vibration of said tire, or a vertical motion sensor arranged at the tire and configured to measure a vertical vibration of said tire and
the device (200) according to claim 12.

## Patentansprüche

1. Verfahren (100) zum Bestimmen eines seitlichen Überrutschzustands eines Fahrzeugs (300), wobei das Verfahren (100) Folgendes umfasst:
Erfassen (S102) von Sensordaten, von einem oder mehreren Sensoren des Fahrzeugs, die eine seitliche und/oder vertikale Vibration des Fahrzeugs (300) betreffen, wobei der eine oder die mehreren Sensoren eines oder mehrere von einer Trägheitsmesseinheit, die dazu konfiguriert ist, eine seitliche Vibration der Karosserie des Fahrzeugs zu messen, einem Beschleunigungsmesser, der an einem Reifen eines Reifensatzes des Fahrzeugs angeordnet und dazu konfiguriert ist, eine seitliche und/oder vertikale Vibration des Reifens zu messen, oder einem vertikalen Bewegungssensor, der an dem Reifen angeordnet und dazu konfiguriert ist, eine vertikale Vibration des Reifens zu messen, umfassen; und
als Reaktion auf ein Erkennen, dass eine Frequenz der seitlichen und/oder vertikalen Vibration des Fahrzeugs (300) innerhalb eines definierten Frequenzbereichs ist, Bestimmen (S104), dass sich das Fahrzeug (300) in dem seitlichen Überrutschzustand befindet, wobei der definierte Frequenzbereich 40-70 Hz ist.

2. Verfahren (100) nach Anspruch 1, wobei die Sensordaten Sensordaten umfassen, die zu einer seitlichen Vibration einer Karosserie (306) des Fahrzeugs (300) gehören, und
wobei das Bestimmen (S104), dass sich das Fahrzeug in dem seitlichen Überrutschzustand befindet, als Reaktion auf das Erkennen durchgeführt wird, dass sich die Frequenz der seitlichen Vibration der Karosserie (306) des Fahrzeugs (300) innerhalb des definierten Frequenzbereichs befindet, und Bestimmen (S106) umfasst, dass sich mindestens ein Reifen des Fahrzeugs (300) in dem seitlichen Überrutschzustand befindet.

3. Verfahren (100) nach Anspruch 2, wobei die Sensordaten, die zu einer seitlichen Vibration einer Karosserie (306) des Fahrzeugs (300) gehören, von einer Trägheitsmesseinheit des Fahrzeugs (300) erfasst werden.

4. Verfahren (100) nach einem der Ansprüche 1 bis 3, wobei die Sensordaten Sensordaten umfassen, die zu einer seitlichen Vibration eines Reifens des Fahrzeugs (300) gehören, und
wobei das Bestimmen (S104), dass sich das Fahrzeug (300) in dem seitlichen Überrutschzustand befindet, als Reaktion auf das Erkennen durchgeführt wird, dass sich die Frequenz der seitlichen Vibration des Reifens innerhalb des definierten Frequenzbereichs befindet, und Bestimmen (S108) umfasst, dass sich der Reifen in dem seitlichen Überrutschzustand befindet.

5. Verfahren (100) nach Anspruch 4, wobei die Sensordaten, die zu der seitlichen Vibration des Reifens gehören, von einem Beschleunigungsmesser, der an dem Reifen angeordnet ist, erfasst werden.

6. Verfahren (100) nach einem der Ansprüche 1 bis 5, wobei die Sensordaten Sensordaten umfassen, die zu einer vertikalen Vibration eines Reifens des Fahrzeugs (300) gehören, und
wobei das Bestimmen (S104), dass sich das Fahrzeug in dem seitlichen Überrutschzustand befindet, als Reaktion auf das Erkennen durchgeführt wird, dass sich die Frequenz der vertikalen Vibration des Reifens innerhalb des definierten Frequenzbereichs befindet, und Bestimmen (S108) umfasst, dass sich der Reifen in dem seitlichen Überrutschzustand befindet.

7. Verfahren (100) nach Anspruch 6, wobei die Sensordaten, die zu der vertikalen Vibration des Reifens gehören, von einem vertikalen Bewegungssensor oder einem Beschleunigungsmesser, der an dem Reifen angeordnet ist, erfasst werden.

8. Verfahren (100) nach einem der Ansprüche 4 bis 7, ferner umfassend als Reaktion auf das Bestimmen, dass sich der Reifen in dem seitlichen Überrutschzustand befindet, Kompensieren (S110), durch einen Dämpfer des Reifens, der Vibrationen.

9. Verfahren (100) nach einem der Ansprüche 1 bis 8, ferner umfassend als Reaktion auf das Bestimmen, dass sich das Fahrzeug (300) in dem seitlichen Überrutschzustand befindet, Aktivieren (S112) eines Stabilitätskontrollsystems des Fahrzeugs.

10. Verfahren (100) nach einem der Ansprüche 1 bis 9, wobei die Sensordaten in Echtzeit erfasst werden.

11. Computerprogrammprodukt, das Anweisungen umfasst, die, wenn das Programm durch eine Rechenvorrichtung ausgeführt wird, die Rechenvorrichtung dazu veranlassen, das Verfahren (100) nach einem der Ansprüche 1 bis 10 umzusetzen.

12. Vorrichtung (200) zum Bestimmen eines seitlichen Überrutschzustands eines Fahrzeugs (300), wobei die Vorrichtung (200) eine Kontrollschaltung (202) umfasst, die zu Folgendem konfiguriert ist:
Erfassen von Sensordaten, von einem oder mehreren Sensoren des Fahrzeugs, die eine seitliche und/oder vertikale Vibration des Fahrzeugs (300) betreffen, wobei der eine oder die mehreren Sensoren eines oder mehrere von einer Trägheitsmesseinheit, die dazu konfiguriert ist, eine seitliche Vibration der Karosserie des Fahrzeugs zu messen, einem Beschleunigungsmesser, der an einem Reifen eines Reifensatzes des Fahrzeugs angeordnet und dazu konfiguriert ist, eine seitliche und/oder vertikale Vibration des Reifens zu messen, oder einem vertikalen Bewegungssensor, der an dem Reifen angeordnet und dazu konfiguriert ist, eine vertikale Vibration des Reifens zu messen, umfassen; und
als Reaktion auf ein Erkennen, dass eine Frequenz der seitlichen und/oder vertikalen Vibration des Fahrzeugs (300) innerhalb eines definierten Frequenzbereichs ist, Bestimmen, dass sich das Fahrzeug (300) in dem seitlichen Überrutschzustand befindet, wobei der definierte Frequenzbereich 40-70 Hz ist.

13. Fahrzeug (300), umfassend:
eine Karosserie (306),
einen Reifensatz (308),
einen oder mehrere Sensoren (302), die dazu konfiguriert sind, Sensordaten, die eine seitliche und/oder vertikale Vibration des Fahrzeugs (300) betreffen, zu erfassen, wobei der eine oder die mehreren Sensoren (302) eines oder mehrere von einer Trägheitsmesseinheit, die dazu konfiguriert ist, eine seitliche Vibration der Karosserie (306) des Fahrzeugs (300) zu messen, einem Beschleunigungsmesser, der an einem Reifen des Reifensatzes (308) angeordnet und dazu konfiguriert ist, eine seitliche und/oder vertikale Vibration des Reifens zu messen, oder einem vertikalen Bewegungssensor, der an dem Reifen angeordnet und dazu konfiguriert ist, eine vertikale Vibration des Reifens zu messen, umfassen, und
die Vorrichtung (200) nach Anspruch 12.

## Revendications

1. Procédé (100) pour la détermination d'une condition de surglissement latéral d'un véhicule (300), le procédé (100) comprenant :
l'obtention (S102) de données de capteur, à partir d'un ou plusieurs capteurs du véhicule, se rapportant à une vibration latérale et/ou verticale du véhicule (300), l'un ou plusieurs capteurs comprenent un ou plusieurs parmi une unité de mesure inertielle configurée pour la mesure d'une vibration latérale de la carrosserie du véhicule, un accéléromètre agencé au niveau d'un pneu d'un ensemble de pneus du véhicule et configuré pour la mesure d'une vibration latérale et/ou verticale dudit pneu, ou un capteur de mouvement vertical agencé au niveau du pneu et configuré pour la mesure d'une vibration verticale dudit pneu ; et
en réponse à la détection d'une fréquence de la vibration latérale et/ou verticale du véhicule (300) étant à l'intérieur d'une plage de fréquences définie, la détermination (S104) du véhicule (300) comme étant dans la condition de surglissement latéral, dans lequel la plage de fréquences définie est 40 à 70 Hz.

2. Procédé (100) selon la revendication 1, dans lequel les données de capteur comprennent des données de capteur se rapportant à une vibration latérale d'une carrosserie (306) du véhicule (300), et
dans lequel la détermination (S104) du véhicule comme étant dans la condition de surglissement latéral est réalisée en réponse à la détection de la fréquence de la vibration latérale de la carrosserie (306) du véhicule (300) étant à l'intérieur de la plage de fréquences définie, et comprend la détermination (S106) d'au moins un pneu du véhicule (300) comme étant dans la condition de surglissement latéral.

3. Procédé (100) selon la revendication 2, dans lequel les données de capteur se rapportant à une vibration latérale d'une carrosserie (306) du véhicule (300) sont obtenues à partir d'une unité de mesure inertielle du véhicule (300).

4. Procédé (100) selon l'une quelconque des revendications 1 à 3, dans lequel les données de capteur comprennent des données de capteur se rapportant à une vibration latérale d'un pneu du véhicule (300), et
dans lequel la détermination (S104) du véhicule (300) comme étant dans la condition de surglissement latéral est réalisée en réponse à la détection de la fréquence de la vibration latérale du pneu étant à l'intérieur de la plage de fréquences définie, et comprend la détermination (S108) dudit pneu comme étant dans la condition de surglissement latéral.

5. Procédé (100) selon la revendication 4, dans lequel les données de capteur se rapportant à la vibration latérale du pneu sont obtenues à partir d'un accéléromètre agencé au niveau dudit pneu.

6. Procédé (100) selon l'une quelconque des revendications 1 à 5, dans lequel les données de capteur comprennent des données de capteur se rapportant à une vibration verticale d'un pneu du véhicule (300), et
dans lequel la détermination (S104) du véhicule comme étant dans la condition de surglissement latéral est réalisée en réponse à la détection de la fréquence de la vibration verticale du pneu étant à l'intérieur de la plage de fréquences définie, et comprend la détermination (S108) dudit pneu comme étant dans la condition de surglissement latéral.

7. Procédé (100) selon la revendication 6, dans lequel les données de capteur se rapportant à la vibration verticale du pneu sont obtenues à partir d'un capteur de mouvement vertical ou d'un accéléromètre agencé au niveau dudit pneu.

8. Procédé (100) selon l'une quelconque des revendications 4 à 7, comprenant en outre, en réponse à la détermination dudit pneu comme étant dans la condition de surglissement latéral, la compensation (S110), par un amortisseur dudit pneu, desdites vibrations.

9. Procédé (100) selon l'une quelconque des revendications 1 à 8, comprenant en outre, en réponse à la détermination du véhicule (300) comme étant dans la condition de surglissement latéral, l'activation (S112) d'un système de commande de stabilité du véhicule.

10. Procédé (100) selon l'une quelconque des revendications 1 à 9, dans lequel les données de capteur sont obtenues en temps réel.

11. Produit programme informatique comprenant des instructions, qui lorsque le programme est exécuté par un dispositif informatique, amène le dispositif informatique à réaliser le procédé (100) selon l'une quelconque des revendications 1 à 10.

12. Dispositif (200) pour la détermination d'une condition de surglissement latéral d'un véhicule (300), le dispositif (200) comprenant une circuiterie de commande (202) configurée pour :
l'obtention de données de capteur, à partir d'un ou plusieurs capteurs du véhicule, se rapportant à une vibration latérale et/ou verticale du véhicule (300), l'un ou plusieurs capteurs comprennent un ou plusieurs parmi une unité de mesure inertielle configurée pour la mesure d'une vibration latérale de la carrosserie du véhicule, un accéléromètre agencé au niveau d'un pneu d'un ensemble de pneus du véhicule et configuré pour la mesure d'une vibration latérale et/ou verticale dudit pneu, ou un capteur de mouvement vertical agencé au niveau du pneu et configuré pour la mesure d'une vibration verticale dudit pneu ; et
en réponse à la détection d'une fréquence de la vibration latérale et/ou verticale du véhicule (300) étant à l'intérieur d'une plage de fréquences définie, la détermination du véhicule (300) comme étant dans la condition de surglissement latéral, dans lequel la plage de fréquences définie est 40 à 70 Hz.

13. Véhicule (300) comprenant :
une carrosserie (306),
un ensemble de pneus (308),
un ou plusieurs capteurs (302) configurés pour l'obtention de données de capteur se rapportant à une vibration latérale et/ou verticale du véhicule (300), dans lequel l'un ou plusieurs capteurs (302) comprend un ou plusieurs parmi une unité de mesure inertielle configurée pour la mesure d'une vibration latérale de la carrosserie (306) du véhicule (300), un accéléromètre agencé au niveau d'un pneu de l'ensemble de pneus (308) et configuré pour la mesure d'une vibration latérale et/ou verticale dudit pneu, ou un capteur de mouvement vertical agencé au niveau du pneu et configuré pour la mesure d'une vibration verticale dudit pneu et
le dispositif (200) selon la revendication 12.
